# EUROPÄISCHE PATENTSCHRIFT

(11) **EP 0 737 740 B1**
(45) Veröffentlichungstag und Bekanntmachung des Hinweises auf die Patenterteilung: **21.10.1998**
(21) Anmeldenummer: 95109491.1
(22) Anmeldetag: 20.06.1995
(51) Int. Cl.: C12G 1/032

(54) **Weinmaischegärung mit Saftumlauf**
Wine fermentation with recirculation of the juice
Vinification avec remontage du jus

(30) Priorität: 11.04.1995 FR 9504613
(43) Veröffentlichungstag der Anmeldung: 16.10.1996
(73) Patentinhaber: Schultis, Erich, 77978 Schweighausen (DE)
(72) Erfinder: Schultis, Erich, 77978 Schweighausen (DE)
(74) Vertreter: Neymeyer, Franz, Dipl.-Ing. (FH)

(56) Entgegenhaltungen:
- FR-A- 1 049 823
- FR-A- 2 489 709

## Beschreibung

Die Erfindung betrifft ein Verfahren zur Weinbereitung, insbesondere Rotweinbereitung sowie eine Vorrichtung zur Durchführung des Verfahrens nach dem Oberbegriff des Patentanspruches 1.

Weinmaischetanks mit Saftumlauf werden insbesondere zur Rotweinbereitung eingesetzt. Beschrieben sind derartige Vorrichtungen in "Die Weinwirtschaft-Technik", Nr. 5, 1986, Seiten 148 bis 163.

Es ist auch ein Verfahren mit Saftumlauf bekannt, bei dem die Saftrückführung druckgesteuert ausgelöst wird (DE 35 00 654 A1.

Alle bekannten Verfahren haben jedoch den Nachteil, daß immer nur soviel Druck aufgebaut wird, wie erforderlich ist, um den Wein in den Überlaufbehälter zu drücken.

Desweiteren wird bei jedem Rücklaufvorgang nicht nur das Überlaufgefäß sondern auch der Gärtank vollkommen entspannt. Dies führt zu hohen Sauerstoffbelastungen.

Der Erfindung liegt die Aufgabe zugrunde, ein Saftumlaufverfahren und eine hierzu geeignete Vorrichtung mit verbesserter Farbstoffausbeute bei gleichzeitig geringer Sauerstoffbelastung zu entwickeln.

Gelöst wird diese Aufgabe durch das im Patentanspruch 1 angegebene Verfahren bzw. durch die im Patentanspruch 6 beschriebene Vorrichtung.

Die Unteransprüche beinhalten bevorzugte Ausgestaltungen der Vorrichtung bzw. des Verfahrens.

Die Vorteile der Erfindung im einzelnen sind:
- Der Überlaufbehälter füllt sich mit Saft bis das Schwimmerventil schließt; daher optimalste Ausnutzung der Gärgase.
- Der Saft läuft drucklos in den Maischetank zurück, weil im geschlossenen Kreislauf gleicher Druck herrscht.
- Es wird nur der Überlaufbehälter entlüftet. Deshalb kann der Saftkreislauf sich je nach Ausdehnungsvolumen und den gebildeten Gärgasen im Maischetank mehrmals hintereinander wiederholen.
- Mit dem Entlüftungsventil kann die Saftgeschwindigkeit beim Aufsteigen in den Überlaufbehälter geregelt werden.
- Deshalb kommt es auch nicht zur Schaumbildung im Überlaufbehälter.
- Es werden der Maische nur kleine Mengen Saft entnommen.
- Der Saft kreislauf ist nicht von der Maischemenge abhängig.
- Der Maischetank und der Überlaufbehälter sind Drucktanks mit einem Überdruckventil.

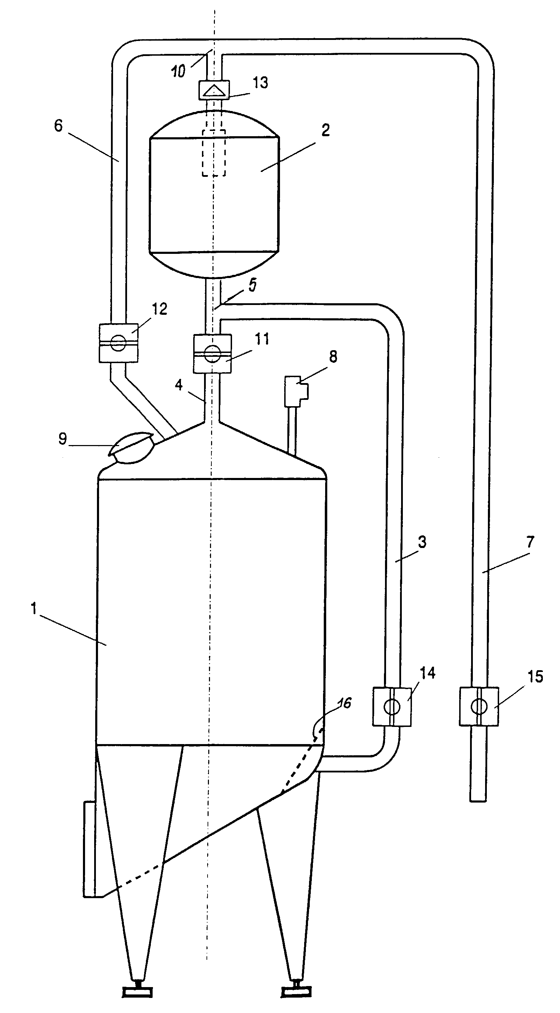

Die Erfindung wird im Nachstehenden anhand eines in der Zeichnung dargestellten Ausführungsbeispiels näher erläutert.

Auf bzw. über dem Gärtank 1 (Drucktank) befindet sich ein kleinerer Überlaufbehälter 2.

Eine Saftvorlaufleitung 3 führt vom Boden des Maischetanks 1 über ein Ventil 14 und über ein T-Stück 5 unterseitig in den Überlaufbehälter 2. Eine Saftrücklaufleitung 4 führt unten vom Überlaufbehälter 2 über ein Ventil 11 oberseitig in den Maischetank 1 zurück, wobei das T-Stück 5 zugleich die Verbindung zur Saftvorlaufleitung herstellt.

Oben im Uberlaufbehälter 2 befindet sich ein Schwimmerventil 13, das durch ein T-Stück 10 mit einer Belüftungsleitung 6 und einer Entlüftungsleitung 7 verbunden ist. Die Belüftungsleitung 6 verbindet über ein Ventil 12 und das Schwimmventil 13 den oberen Teil des Gärtanks 1 mit dem oberen Teil des Überlaufbehälters 2. Durch das T-Stück 10 ist die Belüftungsleitung 6 direkt mit der Entlüftungsleitung 7 verbunden, wobei die Entlüftungsleitung 7 gleichzeitig auch als Überlaufleitung dient und deshalb mit einem Ventil 15 versehen ist.

Nach dem Einfüllen der Maische in den Gärtank 1 wird der Tankdom 9 (Deckel) dicht verschlossen.

Bei der Grundeinstellung sind das Belüftungsventil 12 und das Saftrücklaufventil 11 geschlossen. Das Ventil 14 der Saftvorlaufleitung 3, das Schwimmerventil 13 und das Entlüftungsventil 15 sind geöffnet.

Die Gärung der Maische im Gärtank 1 erzeugt einen Druck, mit dem der Saft durch ein Sieb 16 und durch die Saftvorlaufleitung 3 hoch in den Überlaufbehälter 2 gedrückt wird.

Der Überlaufbehälter 2 füllt sich bis das Schwimmerventil 13 die Entlüftungsleitung 7 schließt. Im Gärtank 1 und im Uberlaufbehälter 2 baut sich jetzt ein höherer Druck bis max. 4 bar auf, der mit einem Überdruckventil 8 überwacht wird.

Der Steuervorgang der Ventile kann manuell oder vollautomatisch gesteuert werden.

Nach Erreichen dieses Druckzustandes werden das Entlüftungsventil 15 und das Ventil 14 der Saftvorlaufleitung 3 geschlossen.

Das Ventil 11 der Saftrücklaufleitung 4 wird geöffnet. Das Ventil 12 der Belüftungsleitung 6 wird geöffnet; die Gärgase drücken das Schwimmerventil 13 nach unten und der im Überlaufbehälter 2 befindliche Saft läuft oben in den Gärtank 1 zurück.

Wenn der Überlaufbehälter 2 leer gelaufen ist, werden das Rücklaufleitungsventil 11 sowie das Belüftungsleitungsventil 12 wieder geschlossen.

Das Saftvorlaufleitungsventil 14 wird geöffnet, und mit dem Öffnen des Entlüftungsventils 15 beginnt wieder Saft aus dem Gärtank 1 in den Überlaufbehälter 2 zu steigen.

Mit dem Öffnungsquerschnitt des Entlüftungsventils 15 wird die Saftgeschwindigkeit so geregelt, daß eine Schaumbildung unterbleibt.

Bei einer automatischen Steuerung wird im Uberlaufbehälter 2 ein Druckschalter angebracht, der die Ventilsteuerung bzw. Ventilumschaltung bei vollem Überlaufbehälter 2 und eingestelltem Druck auslöst.

Mit diesem Saftkreislauf werden aufwendige Rührwerke ersetzt. Der Maische werden nur kleine Mengen Saft entnommen, die ohne Schaumbildung wieder in die Maische zurückgeführt werden.

Der Saft durchströmt die Maische schonend. Somit wird ein besseres Aroma und mehr Farbstoff im Rotwein erreicht.

Mit herkömmlichen Rührwerken und Pumpen werden die Beeren und Beerenkerne verletzt oder gemahlen; das führt zu einem bitteren Geschmack und zu überhöhter Gerbsäure.

### Bezugszeichenliste

- 1: Gärtank Drucktank
- 2: Überlaufbehälter Drucktank
- 3: Saftvorlaufleitung
- 4: Saftrücklaufleitung
- 5: T-Stück
- 6: Belüftungsleitung
- 7: Entlüftungsleitung
- 8: Überdruckventil
- 9: Dom Deckel
- 10: T-Stück
- 11: Ventil Saftrücklaufleitung
- 12: Ventil Belüftungsleitung
- 13: Schwimmerventil
- 14: Ventil Saftvorlaufleitung
- 15: Ventil Entlüftungsleitung
- 16: Sieb

## Patentansprüche

1. Verfahren zur Weinbereitung, insbesondere Rotweinbereitung, wobei ein Teil des Weines mittels der bei der Gärung gebildeten CO₂ aus dem Gärbehälter in einen Überlaufbehälter gedrückt wird und diskontinuierlich der Überlaufbehälter über den Tresterhut zurück in den Gärbehälter entleert wird,
**dadurch gekennzeichnet,**
a) daß zunächst der Überlaufbehälter (2) bei geöffnetem Entlüftungsventil (15) angefüllt wird,
b) daß bei vorgegebenem Flüssigkeitsstand im Überlaufbehälter (2) eine Entlüftungsleitung (7) geschlossen wird, um im System (Gärtank und Überlaufbehälter) einen vorgegebenen Überdruck aufzubauen,
c) daß bei Erreichen des vorgegebenen Überdrucks der Luftraum des Gärtankes mit dem Luftraum des Überlaufgefäßes verbunden wird und der Überlaufbehälter in den Gärtank entleert wird,
d) daß anschließend bei Aufrechterhaltung des Druckes im Gärtank das leere Überlaufgefäß entlüftet wird und
e)daß schließlich die Befüllung des Überlaufbehälters von neuem beginnt.

2. Verfahren nach Anspruch 1, dadurch gekennzeichnet,
- daß in der Stufe "e" ein Überdruck von 2-4 bar aufgebaut wird.

3. Verfahren nach Anspruch 2, dadurch gekennzeichnet,
- daß der Überdruck ca. 3 bar beträgt.

4. Verfahren nach einem der vorhergehenden Ansprüche, dadurch gekennzeichnet,
- daß pro Füllzyklus maximal 15 % des Gärtankvolumens in das Überlaufgefäß gedrückt werden.

5. Verfahren nach einem der vorhergehenden Ansprüche, dadurch gekennzeichnet,
- daß der Überlaufbehälter (2) in der Stufe "a" ganz voll gefüllt wird.

6. Vorrichtung zur Durchführung des Verfahrens gemäß Ansprüche 1 bis 5, umfassend einen Gärtank (1), einen Überlaufbehälter (2), eine Saftvorlaufleitung (3) vom Gärtank (1) zum Überlaufbehälter (2), eine Saftrücklaufleitung (4) vom Überlaufbehälter (2) zum Gärbehälter (1) und eine Entlüftungsleitung (7) für den Überlaufbehälter (2), dadurch gekennzeichnet,
- daß der Luftraum des Gärbehälters (1) mit dem Luftraum des Überlaufbehälters (2) über eine Leitung (6) verbunden ist und daß die Saftvorlaufleitung (3), die Saftrücklaufleitung (4), die Entlüftungsleitung (7) und die Belüftungsleitung (3) mit Absperrorganen versehen sind.

7. Vorrichtung nach Anspruch 6, dadurch gekennzeichnet,
- daß der Gärtank (1) ein Überdruck-Sicherheitsventil aufweist.

8. Vorrichtung nach Anspruch 6 oder 7, dadurch gekennzeichnet,
- daß der Überlaufbehälter (2) ein Volumen von maximal 15 % des Gärtankvolumens aufweist.

9. Vorrichtung nach einem der vorhergehenden Ansprüche 6 bis 8, dadurch gekennzeichnet,
- daß die Entlüftungsleitung (7) über ein Schwimmerventil (13) im Überlaufbehälter (2) schließbar ist.

10. Vorrichtung nach einem der vorhergehenden Ansprüche 6 bis 9, dadurch gekennzeichnet,
- daß die Saftvorlaufleitung (3) von unten in den Überlaufbehälter (2) mündet.

## Claims

1. Method for the preparation of wine, in particular for the preparation of red wine, part of the wine being forced into an overflow tank from the fermentation tank by means of the CO₂ formed at the time of fermentation and the overflow tank being emptied discontinuously back into the fermentation tank by way of the marc of grapes scum characterised in that,
a) first of all the overflow tank (2) is filled up when the vent valve (15) is open,
b) when there is a predetermined liquid level in the overflow tank (2), a vent line (7) is closed, in order to build up a predetermined excess pressure in the system (fermentation tank and overflow tank),
c) on reaching the predetermined excess pressure, the air space of the fermentation tank is connected to the air space of the overflow vessel and the overflow tank is emptied into the fermentation tank,
d) then, whilst maintaining the pressure in the fermentation tank, the empty overflow vessel is vented and
e) finally the filling of the overflow tank starts afresh.

2. Method according to Claim 1, characterised in that,
- in stage "e" an excess pressure of 2-4 bars is built up.

3. Method according to Claim 2, characterised in that,
- the excess pressure amounts to approximately 3 bars.

4. Method according to one of the preceding Claims, characterised in that,
- a maximum of 15% of the fermentation tank volume is forced into the overflow vessel per filling cycle.

5. Method according to one of the preceding Claims, characterised in that,
- the overflow tank (2) is completely filled in stage "a".

6. Apparatus for carrying out the method according to Claims 1 to 5, comprising a fermentation tank (1), an overflow tank (2), a juice flow line (3) from the fermentation tank (1) to the overflow tank (2), a juice return line (4) from the overflow tank (2) to the fermentation tank (1) and a vent line (7) for the overflow tank (2), characterised in that,
- the air space of the fermentation tank (1) is connected to the air space of the overflow tank (2) by way of a line (6) and that the juice flow line (3), the juice return line (4), the vent line (7) and the aeration line (3) are provided with shut-off members.

7. Apparatus according to Claim 6, characterised in that,
- the fermentation tank (1) has an excess pressure safety valve.

8. Apparatus according to Claim 6 or 7, characterised in that the overflow tank (2) has a volume of a maximum of 15% of the fermentation tank volume.

9. Apparatus according to one of the preceding Claims 6 to 8, characterised in that the vent line (7) can be closed off by way of a float valve (13) in the overflow tank (2).

10. Apparatus according to one of the preceding Claims 6 to 9, characterised in that the juice flow line (3) opens from below into the overflow tank (2).

## Revendications

1. Procédé de vinification, en particulier pour la vinification du vin rouge, dans lequel une partie du vin est refoulée, au moyen du CO₂ dégagé par la fermentation, de la cuve de fermentation vers un réservoir de surverse, puis renvoyée de façon discontinue du réservoir de surverse dans la cuve de fermentation par le dôme de marc,
caractérisé en ce que,
a) le réservoir de surverse (2) est d'abord rempli en ouvrant la vanne de sortie d'air (15),
b) lorsque le niveau de remplissage prévu pour le réservoir de surverse (2) est atteint, sa conduite de sortie d'air (7) est fermée pour que s'établisse dans le système (cuve de fermentation et réservoir de surverse) une surpression donnée,
c) lorsque le niveau de surpression prévu est atteint, le volume intérieur de la cuve de fermentation est mis en communication avec le volume intérieur du réservoir de surverse et le réservoir de surverse se vide dans la cuve de fermentation,
d) tout en maintenant la pression dans la cuve de fermentation, le réservoir de surverse vide est ensuite mis en détente et
e) le remplissage du réservoir de surverse peut ensuite recommencer.

2. Procédé selon la revendication 1,
caractérisé en ce que,
- à l'étape "e", une surpression de 2 à 4 bar est établie.

3. Procédé selon la revendication 2,
caractérisé en ce que,
- la surpression est de 3 bar environ.

4. Procédé selon l'une quelconque des revendications précédentes,
caractérisé en ce que,
- pour chaque cycle de remplissage, 15 % au maximum du volume de la cuve de fermentation est refoulé dans le réservoir de surverse.

5. Procédé selon l'une quelconque des revendications précédentes,
caractérisé en ce que,
- à l'étape "a", le réservoir de surverse (2) est rempli en totalité.

6. Dispositif pour la mise en oeuvre du procédé selon les revendications 1 à 5, comprenant une cuve de fermentation (1), un réservoir de surverse (2), une conduite de départ du jus (3) allant de la cuve de fermentation (1) au réservoir de surverse (2), une conduite de retour du jus (4) allant du réservoir de surverse (2) à la cuve de fermentation (1) et une conduite de sortie d'air (7) pour le réservoir de surverse (2),
caractérisé en ce que,
- le volume intérieur de la cuve de fermentation (1) communique avec le volume intérieur du réservoir de surverse (2) par une conduite (6) et en ce que la conduite de départ du jus (3), la conduite de retour du jus (4), la conduite de sortie d'air (7) et la conduite d'entrée d'air (6) comportent des organes de fermeture.

7. Dispositif selon la revendication 6,
caractérisé en ce que,
- la cuve de fermentation (1) est dotée d'une soupape de sécurité contre les surpressions.

8. Dispositif selon les revendications 6 ou 7,
caractérisé en ce que, le volume du réservoir de surverse (2) est égal au maximum à 15 % du volume de la cuve de fermentation (1).

9. Dispositif selon l'une quelconque des revendications 6 à 8,
caractérisé en ce que,
- la conduite de sortie d'air (7) peut être fermée au moyen d'une vanne à flotteur (13) située sur le réservoir de surverse (2).

10. Dispositif selon l'une quelconque des revendications 6 à 9,
caractérisé en ce que,
- la conduite de départ du jus (3) débouche à la base du réservoir de surverse (2).
